# EUROPEAN PATENT APPLICATION

(11) **EP 2 508 147 A1**
(43) Date of publication of application: **10.10.2012**
(21) Application number: 12162897.8
(22) Date of filing: 02.04.2012
(51) Int. Cl.: A61C 19/00

(54) **Light curing device and method of use thereof**

(30) Priority: 06.04.2011 GB 201105833
(71) Applicant: Ideom Technologies Ltd, St Julians STJ 3203 (MT)
(72) Inventor: Fowler, James, Leeds, LS29 8PB (GB)
(74) Representative: Tomkinson, Alexandra

(57) **Abstract**

A light curing device is provided including a housing having a light source provided therein or associated therewith and cooling means to dissipate heat associated with or generated by the light source in use. The cooling means includes one or more heat pipes and/or vapour cooling means.

## Description

This invention relates to a light curing device and a method of using a light curing device.

Although the following description refers almost exclusively to a dental light curing device, it will be appreciated by persons skilled in the art that the present invention could be used in any suitable application.

Light curing devices for use in dentistry are known. Such devices are typically used for curing tooth bonding compositions after the compositions have been applied and shaped to a patient's tooth. The advantage of using tooth bonding compositions that can be cured or hardened on exposure to a curing light for a relatively short period of time (for example, 20-40 seconds) is that the dentist can work at their leisure to apply and shape the composite to the patient's tooth without risk of the composition becoming cured before they have finished. Light curing devices are typically hand held units including a wand having a handle portion at one end, and the opposite end being locatable in a patient's mouth in use. Lighting Means, such as a halogen lamp or light emitting diodes (LEDs), are provided at the opposite free end of the wand to output light in the visible spectrum and within a specific wavelength range suitable for curing a tooth bonding composition.

A problem associated with conventional light curing devices is that heat from the light source is typically dissipated through the handle via conduction. This can result in the device becoming too hot once it has been switched on for a period of time. This can be uncomfortable for the user holding the device and/or could cause injury to the patient if the device contacts the patient's mouth. In addition, medical equipment parts that are to be applied to a patient but which are not intended to supply heat to a patient must comply with British Standard BS EN 60601-1. This Standard requires the surface temperature parts of the medical equipment to not exceed 41°C. In an attempt to overcome this problem, it is known to provide cooling means in the device to keep the light source cool, such as a fan. However, a fan can result in an increased risk in the spread of infection and is harder to clean due to the nature of the fan assembly. Fans are also typically bulky items that increase the size of the device and the cost of producing the same.

It is therefore an aim of the present invention to provide a light curing device that overcomes the abovementioned problem.

It is a further aim of the present invention to provide a method of using a light curing device that overcomes the abovementioned problem.

According to a first aspect of the present invention there is provided a light curing device, said light curing device including a housing having a light source provided therein or associated therewith and cooling means to dissipate heat associated with or generated by the light source in use, and wherein said cooling means includes one or more heat pipes and/or vapour cooling means.

The use of cooling means in the form of one or more heat pipes and/or vapour cooling means removes or reduces heat spots generated by the light source, thereby overcoming the problems associated with the prior art.

Although the use of heat pipes and/or vapour cooling means are known, such as for use as cooling means in the technical field of semi-conductors, to the applicants knowledge they have not previously been used in the field of dentistry and/or for use in light curing devices. By utilising one or more heat pipes or vapour cooling means in a light curing device, the applicant has achieved a number of surprising advantages. These include an increased efficiency of heat dissipation in the device and increased efficiency of the light source, being able to use a higher power light source in the light curing device without the risk of the device becoming too hot, being able to use the device for a longer period of time without the risk of the device becoming too hot, reduced risk of the spread of infection caused by use of the device and extending the life of the light source compared to conventional devices. The use of heat pipes or vapour cooling means also generates very little sound and/or vibration, thereby allowing the device to be used easily in a dental environment without causing unnecessary stress to the patient, such as for example which may be caused by use of other dental devices such as a dentist's drill and/or the like.

Heat pipes are typically substantially sealed vessels that contain a working fluid and/or a working vapour in an interior cavity thereof. The heat pipes and/or vapour cooling means can also include capillary wick lining means if required. The working fluid is of such a type that application of heat at any point on the heat pipe causes the working fluid to change to a working vapour which enables heat energy to be transmitted into the vapour change with only a minimal temperature gradient. The vapour typically condenses at a point in the heat pipe which is sufficiently cool. The capillary wick lining means, if provided, is typically provided adjacent one or more interior walls of the heat pipe and/or vapour cooling means. This lining, which could also be referred to as condensed fluid transport means, acts or helps to transport cooled and condensed fluid back towards the heat source or evaporation point of the heat pipe and/or vapour cooling means.

The vapour cooling means or device typically include a vessel or substantially sealed vessel containing a fluid in an interior cavity thereof. Application of heat to the fluid causes the fluid to vaporise, thereby providing a cooling effect.

Preferably the one or more heat pipes and/or vapour cooling means are provided in a substantially elongate form, such as in the form of a rod for example. The interior cavity containing the working fluid is also preferably provided in a substantially elongate form.

In one embodiment the heat pipe is formed from one or more metallic materials, such as for example copper material. One or more surface material and/or coatings can be provided on the heat pipe, such as for example a tin surface finish.

The dimensions of the heat pipe and/or vapour cooling means can be varied depending on any or any combination of the size of the housing in which the cooling means are to be located, the power and/or number of the light source or sources generating heat and/or the like.

Preferably the housing of the device includes an elongate arm or wand portion. Handle means or a handle portion can be provided at one end of the elongate arm or wand portion and the light source can be provided at or associated with an opposite or distal end thereof. The part of the elongate arm or wand portion with the light source provided at an end thereof is typically of such dimensions to allow it to be located in a patient's mouth in use.

Preferably the one or more heat pipes and/or vapour cooling means are provided between the light source and a handle means or portion of the device. Preferably the one or more heat pipes and/or vapour cooling means are provided in the elongate arm or wand portion.

Further preferably a longitudinal axis of the heat pipe and/or vapour cooling means is substantially co-axial or parallel with the longitudinal axis of the wand portion of the device.

In one embodiment the light source includes one or more light emitting diodes (LEDs). Preferably the colour, number and/or wavelength of light emitted from the LEDs is such so as to allow curing of a tooth bonding composition in use.

Preferably a lens or lenses is/are associated with the light source or said one or more LEDs to focus the light emitted from said light source or said LEDs to a required point or in a required manner. For example, a lens can be provided over or associated with the one or more LEDs.

In one embodiment indication means or devices are provided on the device to indicate a length of time of use and/or curing time of the device, the operational status of the device and/or the like. The indication means can include visual, audio and/or kinaesthetic means. For example, one or more indicator LEDs, audio sounds, vibrations and/or the like can be provided to indicate a pre-determined time period for which the device has been used to cure a composition.

Preferably the device includes control means or control devices for controlling one or more functions of the light curing device and/or the like. The control means can control the operational status of the device (i.e. allowing said device to be moved between "on" and "off" conditions), the light source, the indication means and/or the like.

Preferably the device includes or is associated with power means or a power source for powering the light source, the indication means and/or the like. The power means can include one or more batteries, rechargeable batteries, mains power supply and/or the like.

Preferably the housing of the device is formed from any or any combination of material, such as metal, rubber, plastic and/or the like. In one embodiment the housing is formed from or includes aluminium.

According to a second aspect of the present invention there is provided a method of using a light curing device, said light curing device including a housing having a light source provided therein and wherein said method includes dissipating heat associated with or generated by the light source in use using cooling means, said cooling means including one or more heat pipes and/or vapour cooling means.

An embodiment of the present invention will now be described with reference to the accompanying figures, wherein:

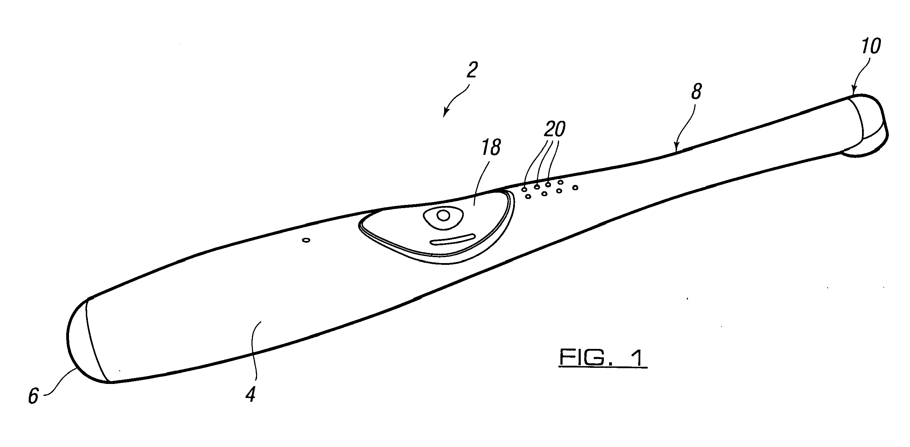

Figure 1 is a perspective view of a light curing device according to the present invention;

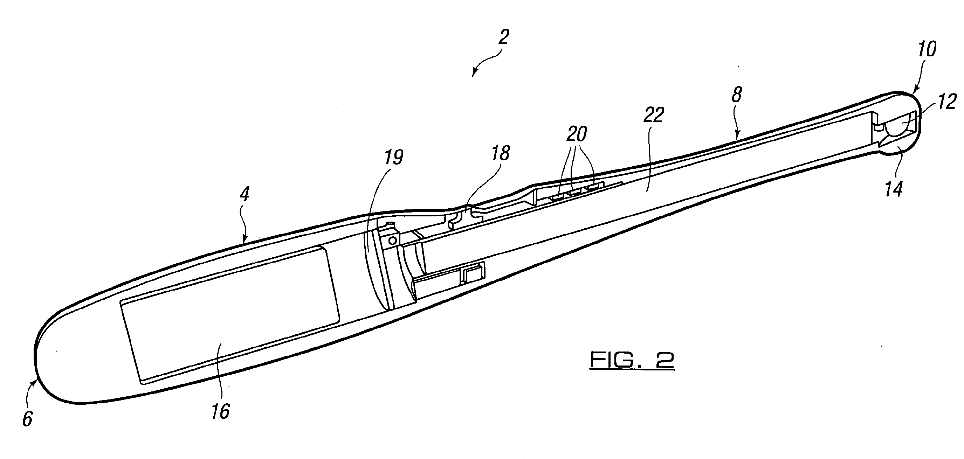

Figure 2 is a cross sectional view of the light curing device in figure 1; and
Figure 3 illustrates the temperature performance of a light curing device with a heat pipe according to an embodiment of the present invention and a light curing device without a heat pipe.

Referring to the figures, there is illustrated a dental light curing device 2. The device comprises a handle portion 4 provided towards end 6 of the device and a wand portion 8 provided towards distal end 10 of the device.

A light source in the form of an LED 12 is provided at distal end 10 of the device. A lens 14 is provided over said LED 12 to focus the light emitted from the LED into the patient's mouth in use.

Power means in the form of a battery 16 is provided in the handle portion 4. Control means in the form of a control switch 18 is provided adjacent handle portion 4 to allow the device to be moved between "on" and "off" conditions. Indication means in the form of indicator LEDs 20 are provided to allow a user to determine the time period of a particular curing operation and/or to indicate whether the device is in an "on" or "off" condition.

Suitable electronic circuitry 19 is provided between the battery 16, the control switch 18, the curing LED 12 and the indicator LEDs 20.

In accordance with the present invention, cooling means in the form of a heat pipe 22 is provided in wand portion 8 between the curing LED 12 and the handle portion 4. The heat pipe 22 in this example comprises a sealed rod containing a fluid in an interior cavity thereof and a capillary wick lining system. The capillary wick lining system includes a porous capillary lining provided on or adjacent the interior wall of the rod. Heat from the LED 12 heats the fluid adjacent the LED and vaporises the same, thereby generating a cooling effect (at an evaporation end of the heat pipe). The vapour then condenses on a cooler part of the rod away from the heat source, such as towards the distal end of the rod opposite to the end where the LED is located (at a condensing end of the heat pipe). The condensed fluid is then returned to the LED end of the rod via the capillary lining. Since the heat pipe is sealed, the fluid remains in a closed loop cycle of liquid phase or wet saturated vapour phase, a vapour phase and a condensed liquid phase.

The use of heat pipe 22 is particularly advantageous since it requires no external power supply, it has no moving parts and so operates silently, and does not require servicing. The applicant has found that a higher powered curing LED can be used compared to those used in conventional light curing devices. The curing device can also be used for longer periods of time without getting too hot compared to conventional devices. The use of the heat pipe can extend the life of the LED and allows the LED to work more efficiently as a result of the temperature of the LED remaining relatively low. The heat pipe can be provided of such dimensions that it is not bulky and allows the wand portion of the device to be sufficiently small to be inserted into a patient's mouth in use.

In use of the light curing device, once a tooth bonding composition has been located and shaped onto a patient's tooth, the wand end 10 of the device 2 is located into a patient's mouth and the LED is pointed in the direction of the composition and switched on. The light emitted from the LEDs allows curing of the tooth bonding composition after a pre-determined period of time. This pre-determined time period can be indicated by the one or more indicator LEDs on the device in one embodiment. Heat generated by the LEDs is dissipated from the LED end using the heat pipe 22 located in the device in an efficient manner.

The handle and/or wand portion of the device can be ergonomically designed to allow a user to easily grip and manipulate the device in use.

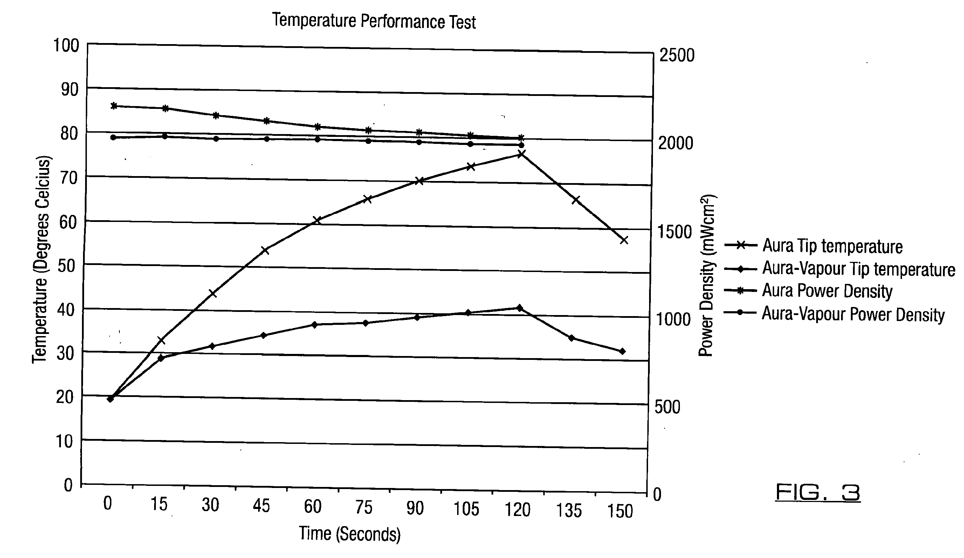

The thermal performance of a light curing device according to the present invention that utilises a heat pipe, compared to the same device that does not utilise a heat pipe, is shown below in Table 1 and Figure 3. The test data is given as an example only of the thermal advantages of the heat pipe and it is not necessarily intended for the device of the present invention to be used at the specified power levels and for the specified time duration.

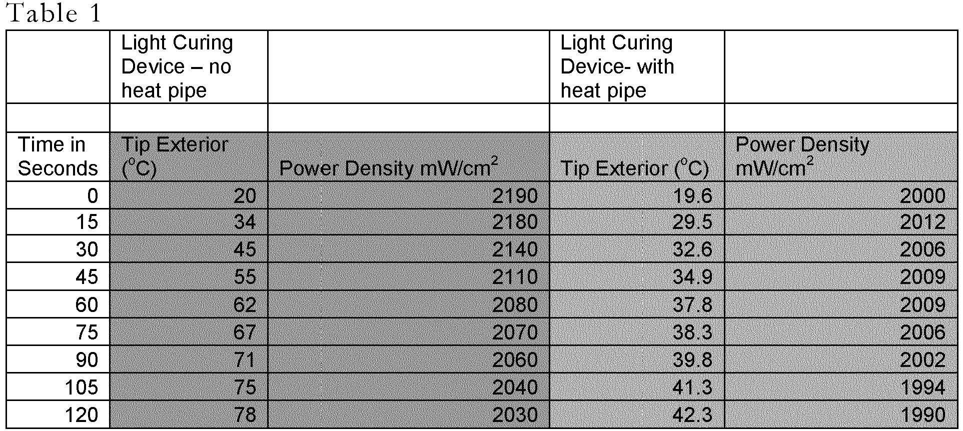

Figure 3 shows the results of the thermal performance testing in graphical form. The Aura Tip and Aura Power D represent conventional light curing devices that do not use a heat pipe as the cooling mechanism. The Aura Vapour Tip and Aura Vapour Power D represent the same conventional light curing devices of the present invention with the inclusion of a heat pipe therein according to the present invention. The results show a dramatic improvement in the temperature of distal or tip end (LED end) of the light curing devices when the heat pipe is used in accordance with the present invention. It also shows an increase in lumen performance, which is the measure of how well an LED performs over time when under load and therefore thermal strain.

It is to be noted that the power density is a measure of the optical power emitted from the light curing device.

## Claims

1. A light curing device, said light curing device including a housing having a light source provided therein or associated therewith and cooling means to dissipate heat associated with or generated by the light source in use, and wherein said cooling means includes one or more heat pipes and/or vapour cooling means.

2. A light curing device according to claim 1 wherein the heat pipe and/or vapour cooling means includes a substantially sealed vessel with an interior cavity defined therein containing a working fluid.

3. A light curing device according to claim 2 wherein the heat pipe and/or vapour cooling means includes a capillary wick lining means or condensed fluid transport means.

4. A light curing device according to claim 1 wherein the one or more heat pipes and/or vapour cooling means is/are provided in a substantially elongate form.

5. A light curing device according to claim 1 wherein the housing includes an elongate arm or wand portion, with handle means provided at one end thereof and the light source provided at an opposite or distal end thereof.

6. A light curing device according to claim 5 wherein the one or more heat pipes and/or vapour cooling means are provided between the light source and a handle portion or the handle means of the device.

7. A light curing device according to claim 5 wherein the one or more heat pipes and/or vapour cooling means are provided in the elongate arm or wand portion.

8. A light curing device according to claim 5 wherein the one or more heat pipes and/or vapour cooling means are substantially co-axial or parallel with the longitudinal axis of the wand portion of the device.

9. A light curing device according to claim 1 wherein the light source includes one or more LEDs.

10. A light curing device according to claim 1 wherein the device further includes a lens or lenses associated with the light source for focusing the light emitted from the light source to a required point or in a required manner.

11. A light curing device according to claim 1 wherein indication means are provided on the device to indicate any or any combination of a length of time of use of the device, curing time of the device and/or the operational status of the device.

12. A light curing device according to claim 11 wherein the indication means includes visual, audio and/or kinaesthetic means.

13. A light curing device according to claim 1 wherein the device includes control means for controlling one or more functions of the device, the light source and/or the indication means.

14. A light curing device according to claim 1 wherein the device includes power means for powering the light source and/or the indication means.

15. A method of using a light curing device, said light curing device including a housing having a light source provided therein and wherein said method includes dissipating heat associated with or generated by the light source in use using cooling means, said cooling means including one or more heat pipes and/or vapour cooling means.
